# FASCICULE DE BREVET EUROPEEN

(11) **EP 3 313 323 B1**
(45) Date de publication et mention de la délivrance du brevet: **16.09.2020**
(21) Numéro de dépôt: 16741666.8
(22) Date de dépôt: 24.06.2016
(51) Int. Cl.: A61C 17/34, A61C 17/40

(54) **BROSSE A DENTS ÉLECTRIQUE A MOUVEMENT ORBITAL**
ELEKTRISCHE ZAHNBÜRSTE MIT ORBITALER BEWEGUNG
ELECTRIC TOOTHBRUSH WITH ORBITAL MOTION

(30) Priorité: 24.06.2015 FR 1501322; 08.01.2016 FR 1650157
(43) Date de publication de la demande: 02.05.2018
(73) Titulaire: Villaume, Michel, 52220 Ceffonds (FR)
(72) Inventeur: Villaume, Michel, 52220 Ceffonds (FR)
(74) Mandataire: Cabinet Bleger-Rhein-Poupon
(86) Numéro de dépôt international: PCT/FR2016/051556
(87) Numéro de publication internationale: WO 2016/207566

(56) Documents cités:
- EP-A1- 2 246 009
- WO-A2-2016/038486
- US-A- 5 253 382
- US-A1- 2009 313 773
- US-A1- 2012 073 849
- US-A1- 2016 067 025

## Description

La présente invention concerne le domaine des brosses à dents, et plus particulièrement des brosses à dents électriques.

De manière plus spécifique, la brosse à dents électrique selon l'invention permet de générer un mouvement particulier, similaire au mouvement qui serait effectué manuellement par une personne soucieuse de se brosser les dents selon la règle communément recommandée, à savoir dirigeant la brosse de la gencive vers le sommet de la dent, c'est-à-dire du rouge vers le blanc. Ce mouvement est difficile à reproduire manuellement à fréquence soutenue.

Toutefois, un tel mouvement est conseillé pour éliminer d'éventuelles particules alimentaires susceptibles de rester coincées entre les dents et éliminer le dépôt de la plaque dentaire qui se forme entre les dents et au collet de la dent, c'est-à-dire à la limite entre la partie enfouie et la partie apparente de la dent.

Par conséquent, ce mouvement permet une meilleure hygiène buccodentaire, notamment par un massage approprié de la gencive.

Il faut noter que le terme « brosse à dents électrique » concerne l'ensemble de l'objet et que le terme « brosse » concerne la touffe de poils ou autre languette de raclage, ainsi que son bâtonnet support.

Une brosse à dents électrique comporte généralement une batterie fournissant l'énergie électrique pour entrainer le mouvement de la tête de brosse.

Traditionnellement, dans l'état de la technique connu décrivant des brosses à dents permettant un brossage de la gencive vers le sommet de la dent, on ne trouve que des systèmes à brosses cylindriques rotatives, comme par exemple dans les documents de brevets FR 2 934 148 et FR 2 659 848.

Il est aussi connu de l'état de la technique des brosses à dents dont le mouvement de la brosse est alternatif, sans que l'on note de retrait par rapport à la surface traitée. Un tel mouvement est par exemple décrit dans le document de brevet FR 2 842 095.

On connaît aussi des systèmes conférant à la brosse un mouvement rotatif alternatif. En particulier, le document DE 3505897 A1 décrit une brosse ayant un parcours en forme de 8, qui apparaît toutefois compliqué à manipuler, notamment pour atteindre les espaces interdentaires.

Le document EP2246009 divulgue une brosse à dents à mouvement orbital comportant un corps, comprenant un levier avec une extrémité distale, sur laquelle on fixe une brosse, et une extrémité proximale liée à des moyens d'entraînement, eux-mêmes liés à des moyens moteurs. Dans cette brosse à dent les moyens d'entraînement sont conçus aptes à entraîner ladite extrémité proximale du levier dans un mouvement comprenant un déplacement circulaire et une oscillation radiale.

Par ailleurs, le document WO2016038486, publié le 17 mars 2016, revendique la date de priorité du 9 septembre 2014. Il divulgue une brosse à dents à mouvement orbital composée d'un corps et d'une tête amovible, ladite tête amovible comprenant un levier avec une extrémité distale portant une brosse, et une extrémité proximale liée à des moyens d'entraînement, qui peuvent être connectés à un moteur situé dans le corps de la brosse et qui sont aptes à entraîner l'extrémité proximale du levier dans un mouvement comprenant un déplacement circulaire et une oscillation radiale. La tête amovible comprend également une liaison rotule qui transmet les mouvements du levier à la brosse.

L'invention offre la possibilité de pallier les divers inconvénients de l'état de la technique en proposant une brosse à dents électrique dans laquelle l'innovation concerne le mécanisme d'entraînement générant un mouvement de la brosse.

En outre, il est envisageable que la brosse à dents selon l'invention comporte un dispositif de sélection du sens de rotation de la brosse, permettant que ledit sens de rotation de la brosse soit adapté, à tout moment du brossage, à la partie de la dentition sur laquelle agit la brosse.

A cet effet, la présente invention concerne une brosse à dents à mouvement orbital comportant un corps, comprenant un levier avec une extrémité distale sur laquelle on fixe une brosse, et une extrémité proximale liée à des moyens d'entraînement, eux-mêmes liés à des moyens moteurs, caractérisée en ce que lesdits moyens d'entraînement sont conçus aptes à entrainer ladite extrémité proximale du levier dans un mouvement comprenant un déplacement circulaire et une oscillation radiale, ledit levier étant par ailleurs maintenu dans ledit corps de ladite brosse à dents au travers d'une liaison rotule disposée au niveau d'une partie intermédiaire dudit levier, entre ladite extrémité distale et ladite extrémité proximale, de sorte à transmettre ledit mouvement à la brosse.

De manière avantageuse, dans un premier mode de réalisation, l'extrémité proximale du levier est liée aux moyens moteurs de manière excentrée par rapport à l'axe de rotation desdits moyens moteurs et en ce que le levier coopère avec une bielle radiale montée coulissante, dont une des extrémités est montée solidaire du corps avec possibilité de pivotement au travers d'une cavité rétentrice conçue apte à permettre le pivotement de ladite extrémité.

Dans un second mode de réalisation avantageux, l'extrémité proximale du levier est liée aux moyens moteurs de manière excentrée par rapport à l'axe de rotation desdits moyens moteurs et en ce que l'extrémité proximale du levier comporte une branche radiale dont l'extrémité libre est conformée pour pouvoir se déplacer librement guidée entre deux parois radiales fixes du corps.

Dans un troisième mode de réalisation, lesdits moyens d'entraînement comportent un pignon menant, positionné sur un arbre transmettant lesdits moyens d'entrainement, et sur lequel pignon menant engrènent deux pignons menés d'axe parallèle à l'axe du pignon menant, chacun desdits pignons menés comportant un maneton respectif et excentré par rapport à l'axe de rotation desdits pignons, le maneton du premier pignon mené recevant un alésage positionné à l'une des extrémités d'une bielle dont le déplacement est perpendiculaire à l'axe des pignons, tandis que le maneton du second pignon mené est engagé dans une gorge longitudinale pratiquée dans l'extrémité opposée de ladite bielle, l'extrémité proximale du levier étant fixée à ladite bielle au niveau d'une zone intermédiaire située entre l'alésage et ladite gorge longitudinale.

La présente invention comporte de nombreux avantages. D'une part, le système de l'invention permet de conférer à la brosse un mouvement circulaire continu et une oscillation angulaire autour de l'axe longitudinal du levier, ces deux mouvements étant à la fois simultanés et synchronisés. L'utilisateur de la brosse oriente et maintien les poils de ladite brosse approximativement perpendiculaires et au contact de la surface traitée, c'est à dire la dent. Lors de la phase non active du cycle de brossage, la brosse opère un retrait par rapport à la surface traitée.

D'autre part, le sens de rotation de la brosse peut être choisi afin de s'adapter de manière optimale à la zone de la dent sur laquelle agit la brosse. Le choix du sens de rotation peut être piloté soit manuellement, au moyen d'un commutateur inverseur dont les touches sont disposées de manière ergonomique

D'autres caractéristiques et avantages de l'invention ressortiront de la description détaillée qui va suivre des modes de réalisation non limitatifs de l'invention, en référence aux figures annexées dans lesquelles :
- La figure 1 représente une vue schématique en coupe transversale de la brosse à dents électrique à mouvement orbital selon l'invention, dont le corps est ajouré en sorte de représenter un premier mode de réalisation du mécanisme interne d'entraînement de la brosse, et la figure 1A illustre un mode de réalisation particulier de la liaison entre la partie de la brosse comportant les poils et le corps de la brosse ;
- La figure 2 représente une vue schématique en perspective d'une partie de la brosse à dents électrique selon l'invention, montrant un mode de réalisation d'une partie des moyens d'entraînement de la brosse ;
- La figure 3 consiste en une vue schématique en perspective de la brosse à dents électrique de l'invention et dont le corps est ajouré en sorte de représenter une première variante d'un second mode de réalisation du mécanisme interne d'entraînement de la brosse ;
- La figure 4 représente une vue schématique en perspective de la brosse à dents électrique à mouvement orbital selon l'invention, dont le corps est ajouré en sorte de représenter une deuxième variante du second mode de réalisation du mécanisme interne d'entraînement de la brosse ;
- La figure 5 est une vue schématique en coupe transversale de la deuxième variante du second mode de réalisation du mécanisme interne d'entraînement de la brosse ;
- La figure 6 représente une vue schématique en perspective d'une partie de la brosse à dents électrique selon l'invention, montrant un troisième mode de réalisation des moyens d'entraînement de la brosse.

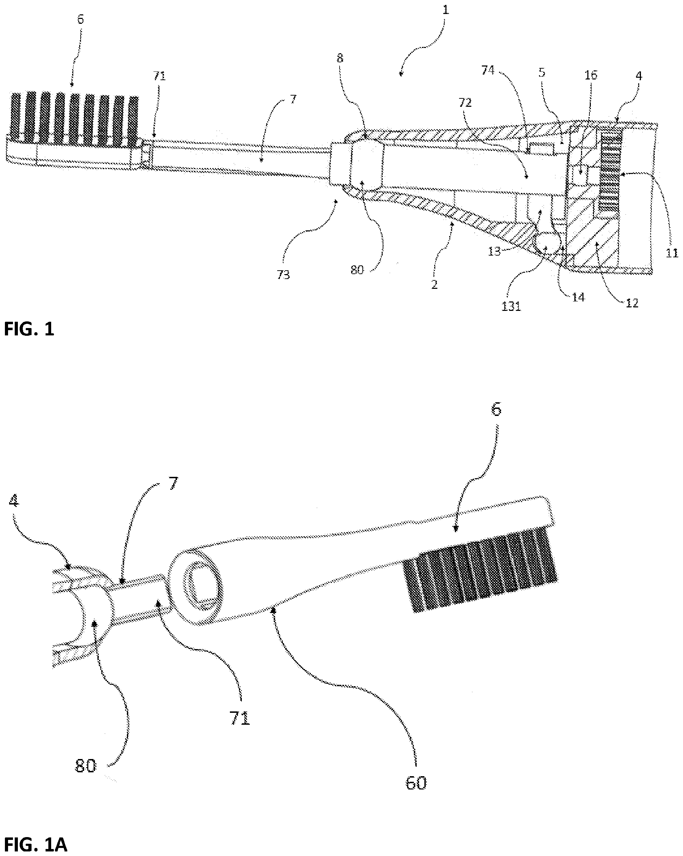

Tel que représentée sur la figure 1, la présente invention concerne une brosse à dents électrique 1 à mouvement orbital.

Ladite brosse à dents 1 comporte un corps 2 incorporant, d'une part, un manchon cylindrique 3, de préférence de section ronde ou ovale, destiné à la prise en main de ladite brosse à dents électrique 1 par l'utilisateur et, d'autre part, un carter 4 prolongeant ledit manchon 3 et comprenant avantageusement le mécanisme de transmission du mouvement.

De préférence, le manchon cylindrique 3 est solidarisé au carter 4 par insertion dudit manchon 3 dans un alésage dudit carter 4, ou inversement, et immobilisation des deux pièces du corps 2 par vissage, baïonnettes ou tout autre moyen adapté à cet effet et connu de l'homme du métier.

La solidarisation du manchon 3 et du carter 4 peut également être assurée par l'intermédiaire d'une platine 12 sur laquelle vient s'emboiter, d'un côté, ledit manchon 3 et, de l'autre, ledit carter 4, avec un moyen de fixation approprié. Dans ce cas, de figure, il est envisageable de prévoir une bague mobile servant à activer le fonctionnement et le sens de rotation en agissant sur les moyens moteurs. Une telle bague peut éventuellement être insérée sur la platine 12 entre le manchon cylindrique 3 et le carter 4.

En effet, généralement, au sein dudit manchon cylindrique 3, sont logés des moyens moteurs, non visibles sur les figures, lesdits moyens étant indifféremment alimentés par pile, accumulateur, voire éventuellement par prise de courant.

Les moyens moteurs permettent une mise en mouvement, au travers de moyens d'entraînement 5 reliés auxdits moyens moteurs, avec ou sans réducteur, d'une brosse 6, ou partie brossante, comprenant une pluralité de rangées ou de touffes de poils.

Plus spécifiquement, le carter 4 du corps 2 de la brosse à dents 1 comporte notamment un levier 7 composé, d'une part, d'une extrémité distale 71, sur laquelle est fixée ladite brosse 6, préférentiellement de manière amovible, et, d'autre part, une extrémité proximale 72 liée aux moyens d'entraînement 5. Ces derniers sont, quant à eux, en liaison avec lesdits moyens moteurs disposés au sein du manchon cylindrique 3, comme expliqué précédemment.

Selon une caractéristique particulièrement intéressante de l'invention, lesdits moyens d'entraînement 5 sont conçus aptes à entrainer ladite extrémité proximale 72 du levier 7, à laquelle ils sont reliés, dans un mouvement comprenant un déplacement circulaire et une oscillation radiale.

Par ailleurs, ledit levier 7 est maintenu dans le carter 4 dudit corps 2, au travers d'une liaison rotule 8 sous la forme d'une sphère 80, et disposée au niveau d'une partie intermédiaire 73 dudit levier 7, entre ses extrémités distale 71 et proximale 72.

Ladite sphère 80 est logée dans une cavité, elle-même de forme sphérique, ménagée dans le corps 2 de la brosse à dents 1, et, plus spécifiquement, au niveau du carter 4.

Ainsi, au travers du levier 7 et grâce à la présence de cette liaison rotule 8, le mouvement circulaire et d'oscillation radiale, conféré à l'extrémité proximale 72 du levier 7 par les moyens d'entraînement 5, est transmis à la brosse 6, positionnée sur l'extrémité distale 71 dudit levier 7.

Plus précisément, ladite brosse 6 est positionnée de manière amovible sur l'extrémité distale 71 et en assurant sa seule position angulaire permise par rapport au levier 7.

En conséquence, la brosse 6 effectue un mouvement de type orbital au contact des dents.

Dans un exemple de réalisation préférentiel représenté sur la figure 1A, montrant la zone de liaison entre le levier 7 et la brosse 6. Cette dernière peut comporter une coiffe 60, laquelle vient s'emboiter sur l'extrémité distale 71 dudit levier 7, couvrant ainsi l'orifice du carter 4 par lequel passe ledit levier 7.

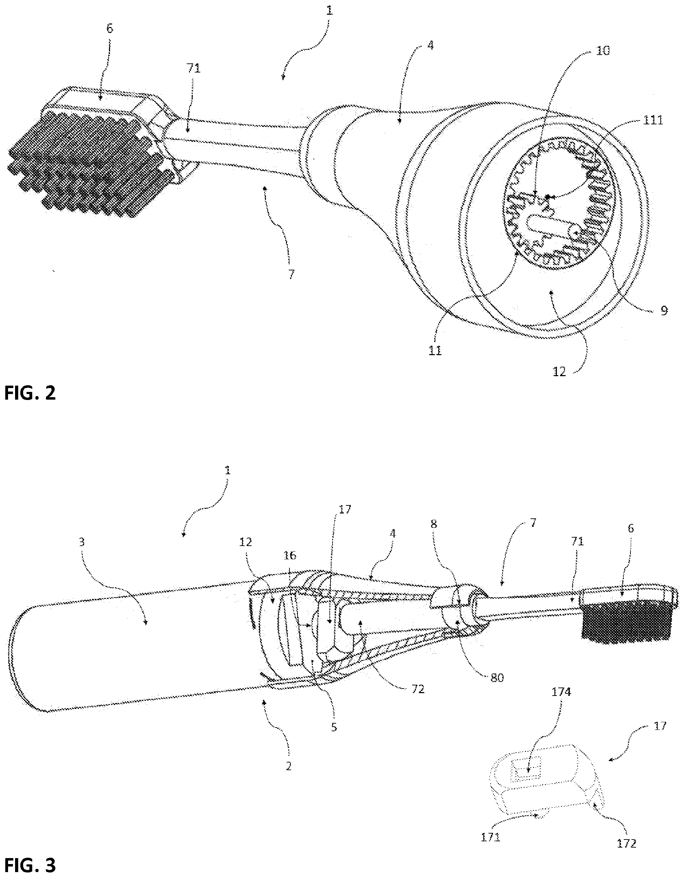

En référence à présent aux figures 1 et 2, représentant un premier mode de réalisation particulier de la brosse à dents 1 à mouvement orbital de l'invention, on note que l'extrémité proximale 72 du levier 7 est liée aux moyens moteurs de manière excentrée par rapport à l'axe de rotation 9 desdits moyens moteurs, ledit axe étant également dénommé arbre primaire 9.

En effet, de manière préférentielle, lesdits moyens moteurs entraînent, via l'arbre primaire 9, un pignon 10, ce dernier étant engrené sur une couronne dentée 11, entrainant par conséquent la rotation de ladite couronne dentée 11 autour de son axe de rotation 111.

Ladite couronne dentée 11 est, quant à elle, excentrée par rapport à une platine 12 portant indirectement l'extrémité proximale 72 du levier 7, via par exemple un arbre de liaison ou de réduction 16, la liaison de ladite extrémité proximale 72 avec ladite platine 12 étant en outre excentrée par rapport à ladite couronne 11 et à son axe 111 pour permettre le mouvement orbital de la brosse 6. En outre, dans ce but, il est également prévu une certaine souplesse entre la couronne dentée 11 et l'extrémité proximale 72 du levier 7 au moyen dudit arbre de liaison 16, ou arbre de sortie du réducteur.

En ce qui concerne ladite platine 12, celle-ci est de forme extérieure préférentiellement cylindrique et peut servir de liaison statique entre le manchon cylindrique 3 et le carter 4 composant le corps 2 de la brosse à dents 1 de l'invention.

En outre, de manière avantageuse, toujours dans le premier mode de réalisation de la présente brosse à dents 1 à mouvement orbital, ledit levier 7 coopère avec une bielle radiale 13, visible sur la figure 1, ladite bielle 13 étant montée coulissante au travers dudit levier 7 et, plus particulièrement, au travers d'un orifice 74 traversant l'extrémité proximale 72 dudit levier 7.

Avantageusement, ladite bielle radiale 13 est également montée solidaire du corps 2 de la brosse à dents 1, plus particulièrement du carter 4, par l'intermédiaire de l'une de ses extrémités 131, et ce au travers d'une cavité rétentrice 14. Cette dernière est aménagée, par exemple, au niveau de la platine 12 ou du carter 4 du corps 2 de la brosse à dents 1 et est conçue apte à permettre le pivotement de l'extrémité 131 de la bielle radiale 13.

Ainsi, une oscillation angulaire de ladite bielle radiale 13 est permise suivant l'axe longitudinal du levier 7, ce dernier étant par ailleurs solidaire en rotation de ladite bielle radiale 13. Celle-ci contraint ledit levier 7 à ne pas tourner librement en rotation sur lui-même mais alternativement, selon un débattement angulaire qui est défini par la distance entre le point d'ancrage de ladite bielle radiale 13 au corps 2 et l'axe longitudinal du levier 7.

L'amplitude du mouvement est variable, il est fonction de la distance qui sépare l'extrémité retenue 131 de la bielle 13 de l'axe du levier 7.

Selon un second mode de réalisation de la brosse à dents 1 à mouvement orbital de l'invention, représenté sur les figures 2 à 5, l'extrémité proximale 72 du levier 7 est liée aux moyens moteurs de manière excentrée par rapport à l'arbre primaire 9, tout comme pour le premier mode de réalisation décrit ci-dessus.

En outre, dans ce second mode de réalisation, l'extrémité proximale 72 du levier 7 est reliée à une branche radiale 17 dont l'extrémité libre est conformée pour pouvoir se déplacer librement, guidée entre deux parois radiales fixes du corps 2.

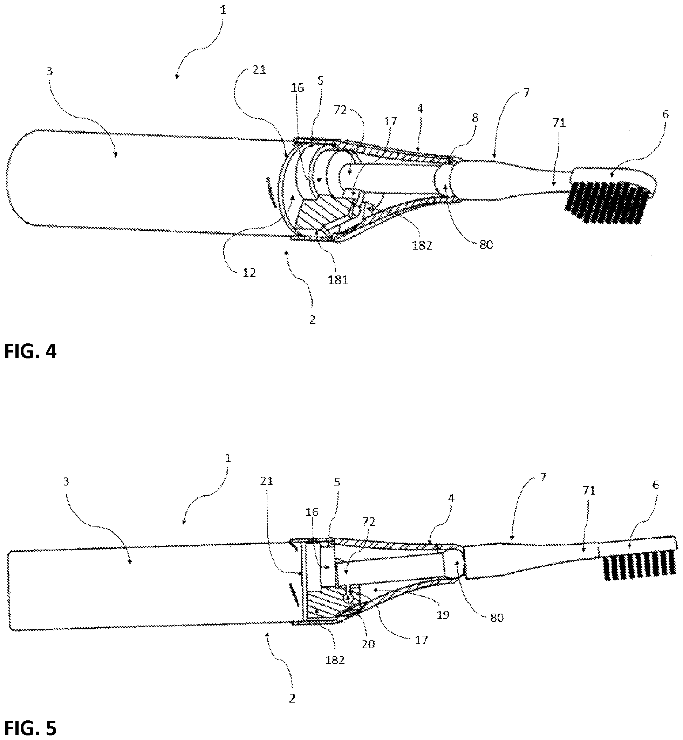

En particulier, l'extrémité libre de ladite branche radiale 17 peut se déplacer en pivotement et dans un mouvement radial par rapport à l'axe 9 des moyens moteurs, ladite branche radiale 17 étant par ailleurs retenue et guidée entre deux parois solidaires du corps 2 de la brosse à dents 1, par exemple, ou solidaires de la platine 12. Sur l'exemple de la figure 4, lesdites deux parois 181, 182 sont solidaires de la platine 12.

La liaison entre ladite branche radiale 17 et le levier 7 est contrainte en rotation et permet un certain débattement angulaire.

Dans une première variante du second mode de réalisation, représentée sur la figure 3, ladite branche radiale 17 est montée sur un alésage de l'arbre de sortie réducteur 16, l'alésage étant excentré, par rapport à l'axe 111 de la couronne dentée 11, et ledit arbre de sortie réducteur 16 traversant lui-même un alésage présent sur la platine 12.

La liaison entre ledit arbre 16 est totalement contrainte et induit un débattement angulaire du levier 7 dans son mouvement orbital.

Un premier maneton 171 de ladite branche radiale 17, visible sur l'agrandissement de la figure 3, pénètre dans ledit alésage excentré de l'arbre 16 ce qui permet un entrainement de ladite branche radiale 17 dans un mouvement circulaire au niveau de son extrémité comportant ledit premier maneton 171.

L'extrémité opposée de ladite branche radiale 17 est guidée par un second maneton 172 entre deux parois, plus particulièrement dans une rainure solidaire de ladite platine 12, non visible sur la figure.

En outre, sur la face de ladite branche radiale 17 opposée à celle comportant les premier et second manetons 171, 172, un orifice 174 permet l'ancrage de l'extrémité proximale 72 du levier 7, celui-ci étant alors articulé à ladite branche radiale 17 de façon solidaire en rotation tout en permettant un certain débattement angulaire autour de la perpendiculaire inscrite entre ladite branche radiale 17 et le levier 7.

Ledit orifice 174 peut avoir différentes formes, notamment carrée ou hexagonale.

Dans une seconde variante du second mode de réalisation particulièrement avantageuse, représentée sur les figures 4 et 5, l'extrémité proximale 72 du levier 7 est ancrée libre en rotation sur l'arbre de liaison 16, ce dernier comprenant un alésage excentré dont le prolongement de l'axe coïncide avec le centre de la cavité hémisphérique 19 aménagée dans le carter 4 du corps 2 de la brosse à dents électrique 1 de l'invention.

Dans cette variante, le levier 7 comporte une branche radiale 17 en liaison avec ledit levier 7 par l'intermédiaire de l'une de ses extrémités, et la seconde extrémité de ladite branche radiale 17 présente un renflement 20 sous la forme d'une olive, celle-ci présentant, de chaque côté, une surface courbe.

Ce renflement 20 est guidé entre deux parois 181, 182, qui sont aménagées dans le corps 2 de la brosse à dents 1 ou sur la platine 12.

Le levier 7 est maintenu longitudinalement entre la cavité hémisphérique 19 aménagée dans le carter 4 d'une part et l'arbre d'entraînement 16 d'autre part.

Avantageusement, une rondelle 21 est positionnée dans le carter 4 entre l'extrémité du manchon cylindrique 3 et la platine 12, en sorte d'absorber la réaction que pourrait avoir le levier 7 sur l'arbre d'entraînement 16, celui-ci constituant une seule pièce avec un pignon, non représenté sur les figures.

Cette rondelle 21 s'avère particulièrement utile en opposition au levier 7 dans le cas notamment où le moyen d'entraînement 5 ne peut prendre appui sur la platine 12.

De manière optionnelle, des demi-coquilles, non représentées sur les figures, peuvent être insérées entre le renflement 20 et les parois de guidage 181 et 182 de façon à augmenter les surfaces en friction. Dans ce but, chacune desdites demi-coquilles épouse, sur une de ses faces, le renflement et, sur l'autre de ses faces, une paroi de guidage 181 ou 182.

Cette variante est particulièrement préférée car elle présente l'avantage d'avoir un nombre réduit de pièces en mouvement.

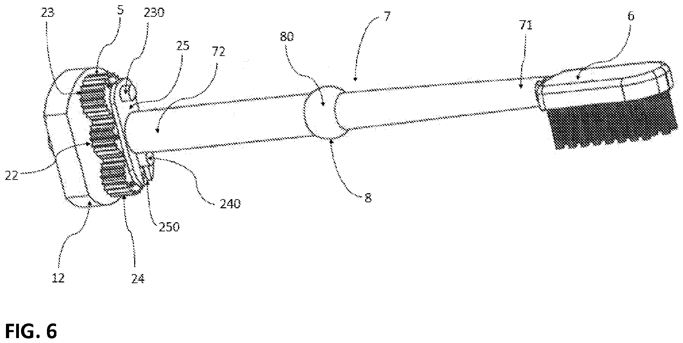

En référence à présent à la figure 6, représentant un troisième mode de réalisation des moyens d'entraînement 5 de la brosse 6, les moyens d'entraînement 5 comportent notamment trois pignons dentés, c'est-à-dire un pignon menant 22, calé sur l'arbre de réduction, non représenté sur la figure, et sur lequel pignon 22 engrènent deux pignons menés 23 et 24.

Les deux pignons menés 23 et 24 sont de même diamètre entrainés par le pignon menant 22 dans le même sens de rotation, de façon synchrone. En outre, lesdits pignons menés 23 et 24 présentent chacun un axe parallèle à celui du pignon menant 22.

Chacun des pignons menés 23, 24 comporte un maneton 230, 240 respectivement, excentré par rapport à l'axe de rotation desdits pignons 23, 24.

De préférence, pour obtenir le mouvement orbital recherché, les deux manetons 230, 240 positionnés respectivement sur les pignons menés 23, 24, sont excentrés à des valeurs différentes.

L'un desdits manetons 230 reçoit un alésage positionné à une extrémité d'une bielle 25, dont le déplacement est perpendiculaire à l'axe des pignons 22, 23, 24, tandis que le maneton 240 du pignon mené 24 est engagé dans une gorge longitudinale 250 pratiquée dans l'extrémité opposée de ladite bielle 25.

L'extrémité proximale 72 du levier 7 est fixée à la bielle 25 au niveau d'une zone intermédiaire entre l'alésage et ladite gorge longitudinale 250.

Le maneton 230 engagé dans l'alésage de la bielle 25 entraine celle-ci dans un mouvement circulaire qui est transmis au levier 7 tandis que le maneton 240 du pignon mené 24 engagé dans la gorge longitudinale 250 entraine la bielle 25 dans un déplacement transversal générant une oscillation radiale du levier 7.

En fonction du choix de calage des pignons menés 23, 24 l'un par rapport à l'autre, on définit l'amplitude d'oscillation du levier 7, et donc de la brosse 6, étant donné la liaison rotule 8.

Toutefois, le décalage éventuel entre pignons ne peut être que de 180° pour conserver la symétrie du mouvement entre les deux sens de rotation.

En ce qui concerne à présent le choix du sens de rotation, permettant une adaptation à la zone sur laquelle agit la brosse 6, celui-ci peut être piloté :
- soit manuellement, avec un commutateur inverseur dont les touches sont disposées de manière ergonomique sur le corps 2 de la brosse à dents 1 selon la direction sur laquelle est exercée intuitivement la pression d'appui de la main de l'utilisateur ;
- soit automatiquement, au moyen de circuits et capteurs électroniques.

Il est également envisageable de combiner les modes de pilotage manuel et automatique du sens de rotation de la brosse 6, en sorte de permettre une mise en rotation de ladite brosse 6 dans le sens adéquat par une impulsion manuelle.

Comme évoqué précédemment, une bague mobile, non représentée sur les figures, peut être prévue pour activer le fonctionnement et le sens de rotation en agissant sur les moyens moteurs.

Une telle bague peut éventuellement être insérée sur la platine 12 entre le manchon cylindrique 3 et le carter 4.

La surface externe de cette bague comporte préférentiellement des aspérités et aux endroits sollicités manuellement et intuitivement pour le sens de rotation approprié.

Hormis la présence de cette bague, des touches de sélection du sens de rotation peuvent être disposées de façon à ce que celles-ci se trouvent à la périphérie de l'ensemble dans la zone sollicitée manuellement pour l'appui de la brosse 6 sur la dentition.

En réaction du couple exercé par la brosse 6 sur la zone à brosser, l'ensemble statique exercera, dans la main qui le tient, un couple inverse qui tendra à forcer et à maintenir l'appui sur l'organe de commande.

Pour cela, la forme de la touche devra présenter une surface en opposition au couple exercé.

En ce qui concerne à présent les moyens manuels pour sélectionner le sens de rotation, ils peuvent être assortis de temporisations évitant les changements de sens intempestifs et/ou assurant un temps d'action déterminé.

Pour la sélection automatique du sens de rotation, différents capteurs peuvent solliciter un dispositif électronique, notamment:
- dans le cas d'un réducteur épicycloïdal, la couronne dentée 11, réputée être fixe, peut être libre en rotation pour agir sur une ou deux jauges de contrainte ou autres capteurs pour déterminer le point du cycle où le couple d'entraînement est le plus important ;
- le corps 2 peut comporter des zones souples dont la direction de la déformation provoquée par la pression sur la dentition agit sur un ou plusieurs capteur(s) sollicité(s) par cette déformation.

L'état de ces différents capteurs renseigne le dispositif électronique qui détermine le sens de rotation opportun.

Pour la sélection automatique du sens de rotation, il peut être établi un sens prioritaire qui sera inversé dans le cas où le ou les capteurs émettront un ou des signaux vers un calculateur. Ce calculateur inversera le sens de rotation si les informations émanant des capteurs sont incompatibles avec un modèle préétabli.

Pour un autre moyen de sélection du sens de rotation, le manchon cylindrique 3 ou, par exemple, un fourreau mobile le recouvrant, solidaire axialement et libre en rotation, agit sur l'un des capteurs attribués au sens de rotation.

Ledit fourreau peut être limité à une zone de prise entre le pouce et l'index.

Dans tous les systèmes de sélection du sens de rotation, un module, ou une carte électronique, pourra intégrer des temporisations pour éviter des inversions ou arrêts intempestifs et/ou dans le but d'optimiser le temps d'action pour une zone traitée.

Dans la conception générale de l'invention, le mouvement de la brosse 6, peut être défini par notamment :
- la longueur de la bielle 13, 25 ou de la branche radiale 17;
- la valeur de l'excentricité du moyen d'entraînement 5 de la bielle 13, 25 ou de la branche radiale 17.

L'amplitude de mouvement de la brosse (9) pourra être définie notamment par:
- la valeur de l'excentricité du moyen d'entraînement 5 de la bielle 13, 25 ou de la branche radiale 17;
- le rapport entre les distances bielle 13, 25 ou branche radiale 17 / sphère 80 et sphère 80 / brosse 6 ;
- la position de l'ancrage du levier 7 sur la bielle 13, 25 ou de la branche radiale 17;
- la distance comprise entre, d'une part l'axe de rotation de la brosse 6, matérialisé par l'axe longitudinal du levier 7, et, d'autre part, la surface active de la brosse 6, définie par la surface constituée par l'extrémité libre des poils.

Dans une version où l'arbre 16 de sortie du réducteur est excentré, la conception du corps 2 permet de décaler de l'axe général la cavité sphérique où est articulé le levier 7.

L'application initiale de l'invention s'adresse à un produit d'hygiène buccodentaire.

De façon non exhaustive, ce type de mécanisme pourrait avoir d'autres applications avec des aménagements appropriés, notamment dans des domaines de nettoyage et traitement de surfaces où des angles sont particulièrement inaccessibles.

Ces aménagements spécifiques pourraient comprendre des outils amovibles rendus solidaires de la bielle et dans le prolongement de celle-ci.

Lesdits outils pourraient comporter une surface active de différentes natures comme, par exemple, une brosse, un abrasif, une lame, etc.

Lesdites surfaces actives pourraient être disposées parallèlement ou perpendiculairement au plan de déplacement de la bielle.

Bien entendu, l'invention n'est pas limitée aux exemples illustrés et décrits précédemment qui peuvent présenter des variantes et modifications sans pour autant sortir du cadre de l'invention telle que définie par les revendications jointes

## Revendications

1. Brosse à dents (1) à mouvement orbital comportant un corps (2) incorporant un manchon cylindrique (3) et un carter (4) prolongeant ledit manchon (3), ledit carter (4) étant solidarisé audit manchon (3), ledit carter (4) comprenant un levier (7) avec une extrémité distale (71) extérieure au carter (4) sur laquelle on fixe une brosse amovible (6), et une extrémité proximale (72) intérieure au carter (4) et liée à des moyens d'entraînement (5), eux-mêmes liés à des moyens moteurs, **caractérisée en ce que** lesdits moyens d'entraînement (5) sont conçus aptes à entrainer ladite extrémité proximale (72) du levier (7) dans un mouvement comprenant un déplacement circulaire et une oscillation radiale, ledit levier (7) étant par ailleurs maintenu dans ledit corps (2) de ladite brosse à dents (6) au travers d'une liaison rotule (8) disposée au niveau d'une partie intermédiaire (73) dudit levier (7), entre ladite extrémité distale (71) et ladite extrémité proximale (72), de sorte à transmettre ledit mouvement à la brosse (2), ladite rotule (8) étant sous la forme d'une sphère (80) logée dans une cavité, elle-même de forme sphérique, ménagée au niveau du carter (4).

2. Brosse à dents (1) à mouvement orbital selon la revendication 1 **caractérisée en ce que** l'extrémité proximale (72) du levier (7) est liée aux moyens moteurs de manière excentrée par rapport à l'axe de rotation (9) desdits moyens moteurs et **en ce que** le levier (7) coopère avec une bielle radiale (13) montée coulissante au travers dudit levier (7), une des extrémités (131) de ladite bielle (13) étant montée solidaire du corps (2) avec possibilité de pivotement au travers d'une cavité rétentrice (14) conçue apte à permettre le pivotement de ladite extrémité (131).

3. Brosse à dents (1) à mouvement orbital selon la revendication 1 **caractérisée en ce que** l'extrémité proximale (72) du levier (7) est liée aux moyens moteurs de manière excentrée par rapport à l'axe de rotation (9) desdits moyens moteurs et **en ce que** l'extrémité proximale (72) du levier (7) comporte une branche radiale (17) dont l'extrémité libre est conformée pour pouvoir se déplacer librement guidée entre deux parois radiales (181, 182) fixes du corps (2).

4. Brosse à dents (1) à mouvement orbital selon la revendication 1 **caractérisée en ce que** lesdits moyens d'entraînement (5) comportent un pignon menant (22), positionné sur un arbre de réduction du mouvement transmis par lesdits moyens moteurs, et sur lequel pignon menant (22) engrènent deux pignons menés (23, 24) d'axe parallèle à l'axe du pignon menant (22), chacun desdits pignons menés (23, 24) comportant un maneton respectif (230, 240) et excentré par rapport à l'axe de rotation desdits pignons (23, 24), le maneton (230) du premier pignon mené (23) recevant un alésage positionné à l'une des extrémités d'une bielle (25) dont le déplacement est perpendiculaire à l'axe des pignons (22,23,24), tandis que le maneton (240) du second pignon mené (24) est engagé dans une gorge longitudinale (250) pratiquée dans l'extrémité opposée de ladite bielle (25), l'extrémité proximale (72) du levier (7) étant fixée à ladite bielle (25) au niveau d'une zone intermédiaire située entre l'alésage et ladite gorge longitudinale (250).

## Patentansprüche

1. Zahnbürste (1) mit kreisförmiger Bewegung, umfassend einen Körper (2), der eine zylindrische Muffe (3) und ein Gehäuse (4) umfasst, das die besagte Muffe (3) verlängert, wobei das besagte Gehäuse (4) fest mit der besagten Muffe (3) verbunden ist, wobei das besagte Gehäuse (4) einen Hebel (7) mit einem distalen Ende (71) außerhalb des Gehäuses (4), auf das eine entfernbare Bürste (6) befestigt wird, und einem proximalen Ende (72) innerhalb des Gehäuses (4) umfasst, das mit Antriebsmitteln (5) verbunden ist, die ihrerseits mit Motormitteln verbunden sind, **dadurch gekennzeichnet, dass** die besagten Antriebsmittel (5) geeignet ausgelegt sind, um das besagte proximale Ende (72) des Hebels (7) in einer Bewegung anzutreiben, die eine kreisförmige Bewegung und eine radiale Schwingung umfasst, wobei der besagte Hebel (7) außerdem in dem besagten Körper (2) der besagten Zahnbürste (6) über ein Kugelgelenk (8) gehalten wird, das im Bereich eines Mittelteils (73) des besagten Hebels (7) zwischen dem besagten distalen Ende (71) und dem besagten proximalen Ende (72) angeordnet ist, sodass der Bürste (2) die besagte Bewegung übertragen wird, wobei das b esagte Kugelgelenk (8) die Form einer Kugel (80) aufweist, die in einem Hohlraum aufgenommen ist, der seinerseits kugelförmig ist und im Bereich des Gehäuses (4) vorgesehen ist.

2. Zahnbürste (1) mit kreisförmiger Bewegung nach Anspruch 1, **dadurch gekennzeichnet, dass** das proximale Ende (72) des Hebels (7) exzentrisch relativ zur Drehachse (9) der besagten Motormittel mit den Motormitteln verbunden ist und dadurch, dass der Hebel (7) mit einer radialen Pleuelstange (13) zusammenwirkt, die gleitbar durch den besagten Hebel (7) montiert ist, wobei eines der Enden (131) der besagten Pleuelstange (13) fest mit dem Körper (2) verbunden montiert ist, mit der Möglichkeit, durch einen Retentionshohlraum (14) zu schwenken, der geeignet ausgelegt ist, um das Schwenken des besagten Endes (131) zu ermöglichen.

3. Zahnbürste (1) mit kreisförmiger Bewegung nach Anspruch 1, **dadurch gekennzeichnet, dass** das proximale Ende (72) des Hebels (7) exzentrisch relativ zur Drehachse (9) der besagten Motormittel mit den Motormitteln verbunden ist und dadurch, dass das proximale Ende (72) des Hebels (7) einen radialen Zweig (17) umfasst, dessen freies Ende geformt ist, um sich zwischen zwei festen radialen Wänden (181, 182) Körper (2) geführt frei zu bewegen.

4. Zahnbürste (1) mit kreisförmiger Bewegung nach Anspruch 1, **dadurch gekennzeichnet, dass** die besagten Antriebsmittel (5) ein Antriebsritzel (22) umfassen, das auf einer Welle zur Reduzierung der von den besagten Motormitteln übertragenen Bewegung positioniert ist, und in welches Antriebsritzel (22) zwei angetriebene Ritzel (23, 24) mit einer Achse parallel zur Achse des Antriebsritzels (22) eingreifen, wobei jedes der besagten angetriebenen Ritzel (23, 24) einen jeweiligen Kurbelzapfen (230, 240) umfasst, der relativ zur Drehachse der besagten Ritzel (23, 24) exzentrisch ist, wobei der Kurbelzapfen (230) des ersten angetriebenen Ritzels (23) eine Bohrung aufnimmt, die an einem der Enden einer Pleuelstange (25) positioniert ist, deren Verschiebung senkrecht zur Achse der Ritzel (22, 23, 24) ist, während der Kurbelzapfen (240) des zweiten angetriebenen Ritzels (24) in einer Längsnut (250) eingeführt ist, die am gegenüberliegenden Ende der besagten Pleuelstange (25) vorgesehen ist, wobei das proximale Ende (72) des Hebels (7) an der besagten Pleuelstange (25) im Bereich eines Mittelbereichs zwischen der Bohrung und der besagten Längsnut (250) befestigt ist.

## Claims

1. Toothbrush (1) with orbital motion including a body (2) incorporating a cylindrical sleeve (3) and a casing (4) extending said sleeve (3), said casing (4) being made integral with said sleeve (3), said casing (4) comprising a lever (7) with a distal end (71) outside the casing (4) to which a removable brush (6) is fastened, and a proximal end (72) inside the casing (4) and linked to drive means (5), which are in turn linked to motor means, wherein said drive means (5) are designed capable of driving said proximal end (72) of the lever (7) in a motion comprising a circular movement and a radial oscillation, said lever (7) being furthermore held in said body (2) of said toothbrush (6) through a ball-joint connection (8) arranged at the level of an intermediate portion (73) of said lever (7), between said distal end (71) and said proximal end (72), so as to transmit said motion to the brush (2), said ball-joint (8) being in the form of a sphere (80) accommodated in a cavity, which has in turn a spherical shape, arranged at the level of the casing (4).

2. Toothbrush (1) with orbital motion according to claim 1, wherein the proximal end (72) of the lever (7) is connected to the motor means eccentrically with respect to the axis of rotation (9) of said motor means and wherein the lever (7) cooperates with a radial connecting rod (13) slidably mounted through said lever (7), one of the ends (131) of said connecting rod (13) being mounted integral with the body (2) with the possibility of pivoting through a retentive cavity (14) designed capable of permitting the pivoting of said end (131).

3. Toothbrush (1) with orbital motion according to claim 1, wherein the proximal end (72) of the lever (7) is connected to the motor means eccentrically with respect to the axis of rotation (9) of said motor means and wherein the proximal end (72) of the lever (7) includes a radial branch (17) the free end of which is shaped so as to be able to move freely guided between two fixed radial walls (181, 182) of the body (2).

4. Toothbrush (1) with orbital motion according to claim 1, wherein said drive means (5) include a driving pinion (22), positioned on a shaft for reducing the motion transmitted by said motor means, and with which driving pinion (22) mesh two driven pinions (23, 24) having an axis parallel to the axis of the driving pinion (22), each of said driven pinions (23, 24) including a respective crank pin (230, 240) and eccentric with respect to the axis of rotation of said pinions (23, 24), the crank pin (230) of the first driven pinion (23) receiving a bore positioned at one of the ends of a connecting rod (25) the movement of which is perpendicular to the axis of the pinions (22, 23, 24), while the crank pin (240) of the second driven pinion (24) is inserted in a longitudinal groove (250) provided for in the opposite end of said connecting rod (25), the proximal end (72) of the lever (7) being fastened to said connecting rod (25) at the level of an intermediate area located between the bore and said longitudinal groove (250).
